# EUROPÄISCHE PATENTSCHRIFT

(11) **EP 2 383 492 B1**
(45) Veröffentlichungstag und Bekanntmachung des Hinweises auf die Patenterteilung: **19.06.2013**
(21) Anmeldenummer: 11162692.5
(22) Anmeldetag: 15.04.2011
(51) Int. Cl.: F16H 61/688

(54) **Verfahren zum Schalten eines Doppelkupplungsgetriebes**
Method for shifting a dual clutch transmission
Procédé de changement de vitesse dans une transmission à embrayage double

(30) Priorität: 27.04.2010 DE 102010018532
(43) Veröffentlichungstag der Anmeldung: 02.11.2011
(73) Patentinhaber: Getrag Ford Transmissions GmbH, 50735 Köln (DE)
(72) Erfinder: Prenger-Berninghoff, Axel, 41812, Erkelenz (DE); Siebigteroth, Marco, 53773, Hennef (DE); Luig, Klaus, 28359 Bremen (DE)

(56) Entgegenhaltungen:
- DE-A1- 10 151 260
- DE-A1- 10 349 220
- DE-A1- 19 853 824
- US-A1- 2004 224 818
- WAGNER G: "DOPPELSCHALTUNGEN BEI DOPPELKUPPLUNGSGETRIEBEN DOUBIS-SHIFTS AT DOUBLE-CLUTCH-TRANSMISSIONS", VDI BERICHTE, DUESSELDORF, DE, Nr. 1170, 1. Januar 1994 (1994-01-01), Seiten 119-135, XP008007821, ISSN: 0083-5560

## Beschreibung

Die Erfindung betrifft ein Verfahren zum Schalten eines Doppelkupplungsgetriebes.

Die DE 198 53 824 A1 offenbart ein Doppelkupplungsgetriebe mit einer Mehrzahl von Gängen, welches einen ersten und einen zweiten parallelen Kraftübertragungszweig aufweist. Eine erste Hauptkupplung ist dem ersten Kraftübertragungszweig zugeordnet, während eine zweite Hauptkupplung dem zweiten Kraftübertragungszweig zugeordnet ist. Mehrere, auch nebeneinander in der Gangfolge angeordnete Schaltstufen sind einem Kraftübertragungszweig angeordnet. Um während des Schaltens zwischen zwei Gangstufen, die einem Kraftübertragungszweig zugeordnet sind, eine Zugkraftunterbrechung zu vermeiden, wird während des Schaltvorgangs Kraft zumindest kurzzeitig über den anderen Kraftübertragungszweig übertragen.

Die DE 103 49 220 A1 betrifft ein Verfahren zum Schalten eines Doppelkupplungsgetriebes eines Kraftfahrzeugs. Bei einem Schaltvorgang, bei dem von einem Quellgang in einen Zielgang geschaltet wird, wobei der Quellgang und der Zielgang einem Kraftübertragungsweg zugeordnet sind, wird zur Vermeidung einer Zugkraftunterbrechung zumindest kurzzeitig ein Stützgang im jeweils anderen Kraftübertragungsweg eingelegt. Dabei erfolgt die Steuerung des Schaltvorgangs im Getriebe vom Quellgang zum Zielgang derart, dass die Motordrehzahl in Richtung auf die Synchrondrehzahl des Zielganges mit einem nahezu konstanten Gradienten zuläuft.

Die DE 101 51 260 A1 betrifft ein Verfahren zur Steuerung eines Doppelkupplungsgetriebes. Um ein sportliches Fahrverhalten zu erzielen, wird bei einer Doppelrückschaltung bewusst auf eine unterbrechungsfreie Kraftübertragung während des Gangstufenwechsels auf einem anderen Teilgetriebe verzichtet.

In der XP008007821 werden drei Schaltstrategien bei Doppelrückschaltungen für Doppelkupplungsgetriebe erörtert. Während eine erste Schaltstrategie dem Verfahren der DE 101 51 260 A1 entspricht, auf einen Stützgang zu verzichten, garantieren eine zweite und dritte Schaltstrategie Schaltungen ohne Zugkraftunterbrechung. Wie auch bei der DE 103 49 220 A1 wird bei der dritten Schaltstrategie über eine Steuerung der Kupplungsmomente die Drehzahl des Motors ausgehend von der Drehzahl des Quellgangs mit konstanter Steigung auf die Drehzahl des Zielgangs angehoben.

Die US-A-2004/0224818 beschreibt ein gattungsgemäβes Verfahren zur Doppelschaltung bei Doppelkupplungsgetrieben, bei dem ebenfalls eine Zugkraftunterbrechung unter Verwendung eines Zwischengangs vermieden wird.

Die Zeit, die für ein Schalten des Doppelkupplungsgetriebes von einem Quellgang zu einem Zielgang benötigt wird, wenn der Zielgang und der Quellgang einer gemeinsamen Antriebswelle zugeordnet sind, kann in entscheidender Weise von der Dauer abhängen, die für das Lösen eines dem Quellgang zugeordneten Zahnrades bzw. das Festsetzen eines dem Zielgang zugewiesenen Zahnrades benötigt wird. In der Regel kann dabei ein Zielgangzahnrad erst dann festgesetzt werden, wenn das Quellgangzahnrad bereits gelöst ist. Diese Vorgänge müssen bei einem Schalten vom Zielgang auf den Quellgang üblicherweise zwangsläufig durchgeführt werden, so dass der Schaltvorgang insgesamt nicht kürzer ablaufen kann, als die durch das Auslegen des Quellgangzahnrades und das Einlegen des Zielgangzahnrades bedingten Zeitspanne.

Es ist Aufgabe der vorliegenden Erfindung ein verbessertes Verfahren zum Schalten eines Doppelkupplungsgetriebes bereitzustellen. Diese Aufgabe wird gelöst durch ein Verfahren zum Schalten eines Doppelkupplungsgetriebes insbesondere eines Kraftfahrzeuges, wobei das Doppelkupplungsgetriebe zwei Antriebswellen und eine Getriebeausgangswelle aufweist, wobei der ersten Antriebswelle eine erste Kupplung und der zweiten Antriebswelle eine zweite Kupplung zugeordnet ist und beide Kupplungen zur Übertragung unterschiedlicher Kupplungsmomente vollständig oder teilweise öffenbar bzw. schließbar sind, wobei der ersten Antriebswelle und der zweiten Antriebswelle jeweils bestimmte unterschiedliche Gangstufen zugeordnet sind, wobei durch die erste Kupplung und durch die ersten Antriebswelle zumindest teilweise ein erster Kraftübertragungsweg von der Getriebeeingangswelle zur Getriebeausgangswelle gebildet ist und wobei durch die zweite Kupplung und durch die zweite Antriebswelle zumindest teilweise ein zweiter Kraftübertragungsweg von der Getriebeeingangswelle zur Getriebeausgangswelle gebildet ist, wobei ausgehend von einem Quellgang in einen Zielgang geschaltet werden soll, wobei vor dem Einschalten des Zielgangs zumindest kurzfristig in einen Stützgang geschaltet wird, wenn der Zielgang und der Quellgang derselben Antriebswelle zugeordnet sind. Motormoment kann dabei über mindestens einen Kraft-übertragungsweg von der Getriebeeingangswelle auf die Getriebeausgangswelle übertragen werden. Die Erfindung ist dadurch gekennzeichnet, dass mit einer ununterbrochenen Reduktion des übertragenden Kupplungsmoments an der dem Quellgang zugeordneten Kupplung auf den Wert Null begonnen ist, bevor mit dem Schließen der dem Stützgang zugeordneten Kupplung begonnen wird. Alternativ oder in Kombination kann die Erfindung auch durch Merkmale anderer Unteransprüche gekennzeichnet sein.

Die Erfindung betrifft dabei derartige Verfahren zum Schalten eines Doppelkupplungsgetriebes, bei denen von einem Quellgang in einen Zielgang geschaltet werden soll, wobei insbesondere der Zielgang und der Quellgang derselben Antriebswelle zugeordnet sind. Zumindest kurzfristig wird dabei in einen Stützgang geschaltet. Der Verlauf der Motordrehzahl ist während eines solchen Schaltvorgangs vorzugsweise stets auf den Zielgang ausgerichtet, was heißen kann, dass die Motordrehzahl in weitgehend konstanter Weise auf die entsprechende Motordrehzahl im Zielgang hin beschleunigt oder abgebremst wird. Dabei ist insbesondere vorgesehen, dass die Motordrehzahl nicht auf einer entsprechenden Drehzahlstufe verharrt, die der Motordrehzahl im Stützgang entspricht. Vielmehr ist vorzugsweise vorgesehen, dass die Verlaufskurve der tatsächlichen Motordrehzahl die Verlaufskurve der fiktiven Motordrehzahl bei geschaltetem Stützgang lediglich in einem Punkt schneidet.

Unter der Formulierung "einen Gang einlegen" wird im Rahmen der vorliegenden Erfindung insbesondere verstanden, dass über eine Klauenkupplung oder über eine ähnliche Vorrichtung ein einem bestimmten Gang zugewiesenes Zahnrad auf einer Welle festgelegt wird, dass anschließend über dieses Zahnrad ein Kraftfluss stattfinden kann. Dabei ist es für das Einlegen unerheblich, ob die dem einzulegenden Gang zugeordnete Kupplung geschlossen ist oder nicht, so dass tatsächlich ein Kraftfluss von einer Getriebeeingangswelle zu der Getriebeausgangswelle über das entsprechende Zahnrad erfolgen kann.

Unter der Formulierung "Auslegen eines Ganges" wird im Rahmen der vorliegenden Erfindung insbesondere verstanden, dass das jeweilige dem entsprechenden Gang zugeordnete Zahnrad von einer Welle gelöst wird, so dass über dieses Zahnrad kein Kraftfluss mehr stattfinden kann. Insbesondere wird die dem auszulegenden Gang zugeordnete Kupplung während des Auslegens des Ganges geöffnet sein, so dass im Zeitpunkt des Lösens des Zahnrades von der Welle kein Kraftfluss von einer Getriebeeingangswelle zu der Getriebeausgangswelle über das entsprechende Zahnrad erfolgen kann.

Unter der Formulierung "Schalten in einen Gang" wird im Rahmen der vorliegenden Erfindung verstanden, dass das Doppelkupplungsgetriebe in einen Zustand einer bestimmten Drehzahlübersetzung ausgehend von einer Getriebeeingangswelle zu einer Getriebeausgangswelle überführt wird. Der Vorgang "in einen Gang schalten" kann dabei das Ein- bzw. Auslegen von Gängen umfassen sowie das Öffnen und Schließen zumindest einer der beiden Kupplungen, so dass ein Kraftübertragungspfad von der Getriebeeingangswelle zur Getriebeausgangswelle hergestellt wird.

Unter der Formulierung "Eine Kupplung schließen" wird im Rahmen der vorliegenden Erfindung insbesondere ein Vorgang verstanden, bei dem durch ein definiertes Aufbauen von Drehmomentübertragungskapazität an der Kupplung, insbesondere zum Zwecke der Kraftübertragung von einer Getriebeeingangswelle zu einer Getriebeausgangswelle erfolgt. Ein Schließen kann dabei insbesondere erst ab Erreichen des sogenannten "Touchpoints" erfolgen, bei dem kein Spiel mehr zwischen Lamellen einer Lamellenkupplung oder einem Kraftbeaufschlagungsmittel und einer Lamelle vorhanden ist. Ein eventuelles Kupplungsbefüllen oder Vorbefüllen, was insbesondere zum Überbrücken oder Entfernen von Spiel vorgesehen ist, wird im Rahmen der vorliegenden Erfindung nicht unter "Schließen einer Kupplung" verstanden, auch wenn während des Kupplungsvorbefüllens ein Schleppmoment vergrößert werden kann.

Unter einer "Reduktion eines übertragenden Kupplungsmoments auf den Wert Null" ist im Rahmen der vorliegenden Erfindung insbesondere zu verstehen, dass beim Erreichen des Wertes Null im Wesentlichen kein Antriebsmoment mehr über die entsprechende Kupplung übertragen werden kann. Eventuelle Schleppmomente, die auch dadurch begründet sein können, dass selbst bei vollständig geöffneter Kupplung durch Reib- oder Strömungskräfte ein gewisses Übertragen von Drehmoment weiterhin erfolgt, können dabei vernachlässigt werden.

Dadurch, dass mit der Reduktion des übertragenen Kupplungsmoments an der dem Quellgang zugeordneten Kupplung begonnen ist, bevor mit dem Schließen der dem Stützgang zugeordneten Kupplung begonnen wird, kann unabhängig von dem Startpunkt bezüglich des Schließens der dem Stützgang zugeordneten Kupplung ein Optimieren der Zeitdauer für den gesamten Schaltprozess erreicht werden. Das Schalten in den Stützgangs und die damit ggf. einhergehende überlappende Drehmomentübergabe von der einen Antriebswelle zur anderen Antriebswelle ist damit nicht mehr zwangsläufiger Bestandteil bei der Festlegung der Gesamtdauer des Schaltprozesses. Insofern kann insgesamt der Zeitpunkt vorverlegt werden, bei dem das Einlegen oder das Schalten in den Zielgang abgeschlossen ist.

Falls nämlich die dem Quellgang zugeordnete Kupplung geschlossen ist, kann ein dem Quellgang zugeordnetes Zahnrad nicht von der entsprechenden Welle gelöst werden, da diese noch unter Last stehen kann. Daher ist zunächst ein Abbauen der Last nötig, was durch die ununterbrochene Reduktion des übertragenen Kupplungsmoments an der dem Quellgang zugeordneten Kupplung auf den Wert Null erreicht wird. Mit anderen Worten wird dabei die dem Quellgang zugeordnete Kupplung geöffnet, und zwar vorzugsweise möglichst schnell. Unter einer ununterbrochenen Reduktion ist dabei insbesondere zu verstehen, dass das übertragene Kupplungsmoment an der Kupplung zu keinem Zeitpunkt einen ansteigenden Verlauf aufweist. Dabei ist es möglich, dass zu einem Zeitpunkt zumindest kurzzeitig ein konstanter Verlauf möglich ist. Es ist jedoch bevorzugt, dass zu keinem Zeitpunkt ein konstanter Verlauf vorgesehen ist. Die Kupplungsmomentenkurve ist somit über die Zeit vorzugsweise stets abfallend.

Vorzugsweise weist die ununterbrochene Reduktion einen weitgehend linearen Verlauf auf. Hierdurch kann sich ein sanftes Öffnen der Kupplung ergeben, was positive Auswirkungen auf das Fahrverhalten haben kann. Unter einem weitgehend linearen Verlauf sind auch derartige Verläufe mit umfasst, bei denen zu Beginn und Ende des Öffnungsvorgangs Übergänge wie konkave oder konvexe Krümmungen in der entsprechenden Verlaufskurve vorgesehen sind.

Vorzugsweise wird die Dauer der ununterbrochenen Reduktion des übertragenden Kupplungsmoments in Abhängigkeit von der benötigten Zeit für das Einlegen und/oder das Kupplungsbefüllen des Stützgangs gesteuert. Alternativ oder in Kombination hierzu wird die Dauer der ununterbrochenen Reduktion des übertragenen Kupplungsmoments in Abhängigkeit von der benötigten Zeit für das Auslegen des Quellgangs und Einlegen des Zielgangs gesteuert. Durch das Steuern der Dauer der ununterbrochenen Reduktion zumindest in Abhängigkeit einer der genannten Bedingungen kann ein erhöhter Fahrkomfort erzielt werden. Dabei kann insbesondere gezielt die Dauer der ununterbrochenen Reduktion etwas verlängert werden, wenn aufgrund anderer Bedingungen eine mögliche Einsparung im Gesamtschaltprozess bereits ausgereizt ist, d.h. durch eine weitere Verkürzung der ununterbrochenen Reduktion kein Zeitgewinn mehr erzielt werden kann. Je länger nämlich die Zeitdauer der ununterbrochenen Reduktion ist, desto sanfter kann diese Reduktion vom Fahrer empfunden werden.

Erfindungsgemäß wird beim Wechsel von dem Quellgang auf den Stützgang nicht mit dem Schließen der dem Stützgang zugeordneten Kupplung begonnen, bevor die dem Quellgang zugeordnete Kupplung vollständig geöffnet ist. Durch diese zeitliche Aufeinanderfolge von Ereignissen wird bewusst die Möglichkeit einer Zugkraftunterbrechung beim Schalten auf den Stützgang erwogen. Eine gezielte Zugkraftunterbrechung kann jedoch vom Fahrer als Ausdruck einer sportlichen Fahrweise verstanden werden, insbesondere wenn dies als eine unmittelbare Reaktion auf einen Fahrbefehl, beispielsweise Kickdown, aufgefasst wird.

Vorzugsweise wird zumindest zeitweise während des Auslegens des Quellgangs und/oder während des Öffnens der dem Quellgang zugeordneten Kupplung der Stützgang eingelegt. Durch die zeitliche Überschneidung von Auslegen des Quellgangs bzw. Öffnen der Kupplung und Einlegen des Stützgangs kann ferner eine zeitliche Optimierung des Gesamtschaltvorgangs erreicht werden.

Vorzugsweise wird beim Wechsel vom Stützgang auf den Zielgang während eines Öffnens der dem Stützgang zugeordneten Kupplung die dem Zielgang zugeordnete Kupplung geschlossen. Dieser Vorgang entspricht weitgehend dem üblichen beim Doppelkupplungsgetriebe verwendeten Vorgang des Wechsels der Kraftübertragung von einer Antriebswelle zu der anderen Antriebswelle, so dass weitgehend eine Zugkraftunterbrechung vermieden werden kann. Zwar ist es im vorliegenden Verfahren grundsätzlich möglich, dass zu einem frühen Zeitpunkt des Schaltvorgangs eine Zugkraftunterbrechnung möglich ist; zu einem späteren Zeitpunkt des Schaltvorgangs, insbesondere wenn vom Stützgang auf den Zielgang geschaltet wird, wird hingegen eine Zugkraftunterbrechung von einem Fahrer nicht mehr als angenehm empfunden, da diese Zugkraftunterbrechung dann nicht mehr in unmittelbare Beziehung mit dem ursprünglichen Fahrbefehl, z.B. Kickdown, gebracht werden kann. Insofern ist es vorteilhaft, dass trotz dem erwünschten zügigen Schalten des Getriebes in den frühen Verfahrensschritten ein zugkraftunterbrechungsfreies Schalten vom Stützgang auf den Zielgang erfolgt.

Vorzugsweise wird erst nach einer Aufforderung zum Gangwechsel mit der ununterbrochenen Reduktion des übertragenden Kupplungsmoments an der den Quellgang zugeordneten Kupplung auf den Wert Null begonnen oder mit dem Auslegen des Quellgangs begonnen. Folglich können diese Maßnahmen dann als Reaktion auf einen speziellen Fahrbefehl, nämlich insbesondere das Durchdrücken des Gaspedals erfolgen. Weiter vorzugsweise wird unmittelbar nach der Aufforderung zum Gangwechsel mit der ununterbrochenen Reduktion des übertragenden Kupplungsmoments an der dem Quellgang zugeordneten Kupplung auf den Wert Null begonnen oder mit dem Auslegen des Quellgangs begonnen. Hierdurch kann der Zeitpunkt, bei dem das Einlegen des Zielgangs vollständig durchgeführt ist, zeitlich nach vorne verschoben werden. Hierdurch kann insgesamt eine Verkürzung der Dauer von der Aufforderung des Gangwechsels bis zum Abschluss des Einlegens des Zielganges erzielt werden, was insgesamt die Dauer des Schaltvorgangs von einem Quellgang in einen Zielgang reduzieren kann. Dies ist insbesondere dann der Fall, wenn der Quellgang und der Zielgang einer gemeinsamen Antriebswelle zugeordnet sind.

Alternativ kann auch vor einer Aufforderung zum Gangwechsel mit der ununterbrochenen Reduktion des übertragenden Kupplungsmoments an der dem Zielgang zugeordneten Kupplung auf den Wert Null begonnen werden. Zum Zeitpunkt der Aufforderung zum Gangwechsel ist dann bereits mit der Reduktion begonnen.

Vorzugsweise wird bei einem Segeln mit geöffneten Kupplungen unmittelbar nachdem ein Auffordern zum Gangwechsel festgestellt wird, ein Schließen der dem Stützgang zugeordneten Kupplung veranlasst. Unter einem Segeln wird dabei ein Zustand des Fahrzeugs verstanden, bei dem zwar ein oder zwei Gänge eingelegt sind, jedoch beide den jeweiligen Antriebswellen zugeordnete Kupplungen geöffnet sind. Eine Kopplung zwischen Antriebsmotor und Rädern des Fahrzeugs ist dann nicht vorhanden. Dadurch, dass unmittelbar nach der Aufforderung zum Gangwechsel die dem Stützgang zugeordnete Kupplung geschlossen wird, kann der Schaltvorgang insgesamt zeitlich verkürzt werden. Es kann dabei auch der Zeitraum mit umfasst sein, bei dem die Motordrehzahl von einer Leerlaufdrehzahl auf eine bestimmte Drehzahl beschleunigt wird, bei der ein Abstützen auf dem Stützgang ohne merkliches Abbremsen des Fahrzeugs möglich ist.

Die Erfindung betrifft ferner ein Doppelkupplungsgetriebe, welches mittels eines Verfahrens nach einem der vorhergehenden Ansprüche geschaltet wird.

Die Erfindung wird anhand der nachfolgenden Figuren näher erläutert. Hierin zeigt:
- Figur 1: den schematischen Aufbau eines Doppelkupplungsgetriebes zur Anwendung des erfindungsgemäßen Verfahrens;
- Figur 2: Verlaufskurven eines herkömmlichen Verfahrens zur Rückschaltung bei einem Doppelkupplungsgetriebe;
- Figur 3: Verlaufskurven eines erfindungsgemäßen Verfahrens;
- Figur 4: alternative Verlaufskurven eines erfindungsgemäßen Verfahrens.

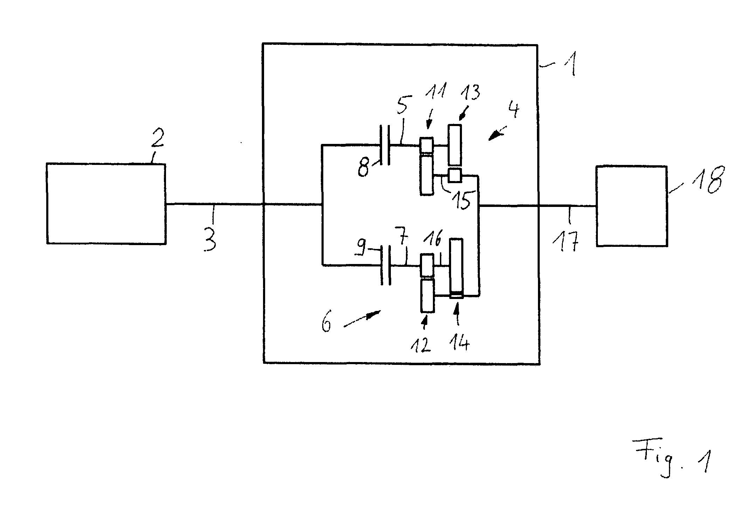

Figur 1 zeigt ein Doppelkupplungsgetriebe 1, welches durch ein erfindungsgemäßes Verfahren zum Schalten gesteuert werden kann. Das Doppelkupplungsgetriebe 1 ist mittels einer Getriebeeingangswelle 3 mit einem Antriebsmotor 2 antriebsverbunden. Das Doppelkupplungsgetriebe 1 weist ein erstes Teilgetriebe 4 mit einer ersten Antriebswelle 5 auf, wobei die Antriebswelle 5 über eine erste Kupplung 8 mit der Getriebeeingangswelle 3 antriebsverbunden ist. Über die erste Kupplung 8 kann ein Trennen der Antriebsverbindung der ersten Antriebswelle 5 von der Getriebeeingangswelle 3 vorgenommen werden. Über eine erste Abtriebswelle 15 ist das erste Teilgetriebe 4 mit einer gemeinsamen Getriebeausgangswelle 17 verbunden, an die ein Differentialgetriebe 18 angeschlossen werden kann. Der ersten Antriebswelle 5 sowie der ersten Abtriebswelle 15 ist ein erstes Radpaar 11 und ein drittes Radpaar 13 zugeordnet. Es können auch weitere Radpaare vorgesehen sein. Über nicht dargestellte Einrückmittel kann zumindest ein Zahnrad des ersten oder dritten Radpaares mit der Antriebswelle oder der Abtriebswelle verbunden bzw. gelöst werden. Je nachdem mit welchem Radpaar sowohl die Antriebswelle als auch die Abtriebswelle fest verbunden sind, wird der Gang definiert, der im jeweiligen Teilgetriebe eingelegt ist.

Ferner weist das Doppelkupplungsgetriebe 1 ein zweites Teilgetriebe 6 auf, das im Wesentlichen dem ersten Teilgetriebe 4 entspricht. Das zweite Teilgetriebe 6 umfasst eine zweite Antriebswelle 7, die über eine zweite Kupplung 9 mit der Getriebeeingangswelle 3 antriebsverbunden ist. Über die zweite Kupplung 9 kann ein Trennen der Antriebsverbindung der zweiten Antriebswelle 7 und der Getriebeeingangswelle 3 vorgenommen werden. Über eine zweite Abtriebswelle 16 ist das zweite Teilgetriebe 6 mit der gemeinsamen Getriebeausgangswelle 17 verbunden. Der zweiten Antriebswelle 7 sowie der zweiten Abtriebswelle 16 ist ein zweites Radpaar 12 und ein viertes Radpaar 14 zugeordnet. Es können auch weitere Radpaare vorgesehen sein. Über nicht dargestellte Einrückmittel kann zumindest ein Zahnrad des zweiten oder vierten Radpaares mit der Antriebswelle oder der Abtriebswelle verbunden bzw. gelöst werden. Je nach dem mit welchem Radpaar sowohl die Antriebswelle als auch die Abtriebswelle fest verbunden sind, wird der Gang definiert, der im jeweiligen Teilgetriebe eingelegt ist.

Bei einer Rückschaltung von dem vierten in den zweiten Gang sind in der Ausgangssituation zunächst die Zahnräder des vierten Radpaares fest mit der zweiten Antriebswelle 7 bzw. der zweiten Abtriebswelle 16 verbunden. Bevor in den zweiten Gang geschaltet wird, wird zunächst in den dritten Gang geschaltet, wobei die Zahnräder des dritten Radpaares bei zunächst geöffneter erster Kupplung 8 fest mit der ersten Antriebswelle 5 bzw. mit der ersten Abtriebswelle 15 verbunden werden. Damit ist der dritte Gang eingelegt. Zum endgültigen Schalten in den dritten Gang wird anschließend die erste Kupplung 8 geschlossen. Die zweite Kupplung 9 ist dann geöffnet, so dass der vierte Gang ausgeschaltet ist. Sobald die zweite Kupplung 9 geöffnet ist, kann der vierte Gang ausgelegt werden, indem ein oder mehrere Räder des vierten Radpaares von der zweiten Antriebswelle 7 bzw. von der zweiten Abtriebswelle 16 gelöst werden. Anschließend kann der zweite Gang eingelegt werden, wobei die Zahnräder des zweiten Radpaares mit der zweiten Antriebswelle 7 bzw. der zweiten Abtriebswelle 16 drehfest verbunden werden. Wenn der zweite Gang eingelegt ist, kann das Schalten in den zweiten Gang fortgeführt werden, indem die zweite Kupplung 9 geschlossen wird. Synchron zum Schließen der zweiten Kupplung 9 wird die erste Kupplung 8 geöffnet, so dass ein fließender Übergang von Drehmoment vom ersten Teilgetriebe 4 auf das zweite Teilgetriebe 6 erfolgt. Das Schalten vom dritten Gang auf den zweiten Gang erfolgt dabei ohne Zugkraftunterbrechung.

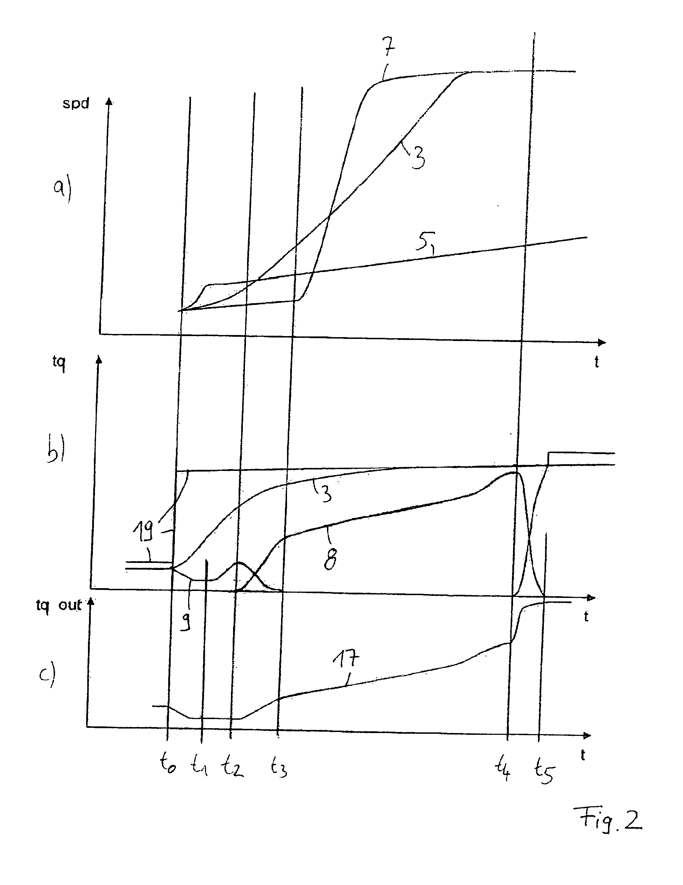

Anhand der Figur 2 wird ein herkömmliches Verfahren zur Doppelrückschaltung bei einem Doppelkupplungsgetriebe erläutert, wobei der vierte Gang und der zweite Gang einem gemeinsamen Teilgetriebe zugeordnet sind. Die Darstellungen entsprechen aber auch weitgehend anderen Rückschaltungen, bei denen der Zielgang demselben Teilgetriebe zugeordnet ist wie der Quellgang. Es ist in Figur 2a der zeitliche Verlauf der Drehzahlen der Getriebeeingangswelle 3, der zweiten Antriebswelle 7, der sowohl der Quellgang wie auch der Zielgang zugeordnet sind, sowie der ersten Antriebswelle 5, der der Stützgang zugeordnet ist. In Figur 2b ist der zeitliche Verlauf der Drehmomentanforderung 19 dargestellt, welcher weitgehend der Stellung eines Gaspedals entsprechen kann. Ferner ist in Figur 2b der Drehmomentverlauf an der Getriebeeingangswelle 3 sowie an der zweiten Kupplung 9, der der Quellgang und der Zielgang zugeordnet sind, sowie der ersten Kupplung 8, der der Stützgang zugeordnet ist. Figur 2c zeigt den Drehmomentverlauf an der Getriebeausgangswelle 17.

Zu einem Zeitpunkt t < t₀ ist der vierte Gang eingeschaltet. Das Fahrzeug fährt mit konstanter Drehmomentanforderung und konstantem Drehmoment an der Getriebeausgangswelle 17 mit konstanter Geschwindigkeit. Zu einem Zeitpunkt t₀ wird von einem Fahrer das Gaspedal stark betätigt, so dass eine stufenartige große Änderung der Drehmomentanforderung 19 erfolgt. Mit der Erhöhung der Drehmomentanforderung wird von einer separaten Steuereinrichtung festgestellt, dass ein Gangwechsel von dem vierten in den zweiten Gang erforderlich ist. Dabei wird von der Steuereinheit festgelegt, dass der dritte Gang als Stützgang verwendet wird. Unmittelbar darauf wird die zweite Kupplung 9 teilweise geöffnet und das Motorantriebsmoment erhöht. Hierdurch erfolgt eine Erhöhung der Drehzahl der Getriebeeingangswelle 3.

Im Bereich zwischen t₀ und t₂ befindet sich das Getriebe in einer Phase der Drehzahlanpassung, bei der die zweite Kupplung 9 teilweise geöffnet ist. Durch ein Erhöhen des Motormoments und eine Reduzierung des an der zweiten Kupplung 9 übertragenen Drehmoments wird eine Erhöhung der Drehzahl des Antriebsmotors 2 und damit eine Erhöhung der Antriebszahl der Getriebeeingangswelle 3 erzeugt. In einem Zeitraum zwischen t₀ und t₁ wird der dritte Gang als Stützgang eingelegt. Im Zeitpunkt t₂ ist das Einlegen des Stützgangs abgeschlossen. Nun kann mit einem Schließen der dem dritten Gang zugeordneten ersten Kupplung 8 begonnen werden, so dass vollständig in den dritten Gang als Stützgang geschaltet wird. In einem zeitlichen Bereich vor t₂ erfolgt ein geringfügiges Schließen der zweiten Kupplung 9, so dass das an der zweiten Kupplung 9 übertragene Drehmoment etwas erhöht wird. Im Bereich t₂ bis t₃ erfolgt eine Drehmomentübergabe von dem zweiten Teilgetriebe 6 auf das erste Teilgetriebe 4, wobei die zweite Kupplung 9 stetig geöffnet wird, während gleichzeitig die erste Kupplung 8 stetig geschlossen wird. Zu einem Zeitpunkt t₃ ist die zweite Kupplung 9 dann vollständig geöffnet und die erste Kupplung 8 vollständig geschlossen. Nun kann mit dem Auslegen des vierten Ganges und dem Einlegen des zweiten Ganges begonnen werden. Für das Auslegen des vierten Ganges und das abschließende Einlegen des zweiten Ganges wird die Zeit zwischen t₃ und t₄ benötigt. Erst wenn zum Zeitpunkt t₄ der zweite Gang vollständig eingelegt ist, kann das Schalten in den zweiten Gang abgeschlossen werden. Dabei wird die zweite Kupplung 9 stetig geschlossen, während die erste Kupplung 8 stetig geöffnet wird. Hierbei erfolgt ein Übergang des Drehmoments vom ersten Teilgetriebe 4 auf das zweite Teilgetriebe 6 ohne Zugkraftunterbrechung. Zum Zeitpunkt t₅ ist der zweite Gang vollständig geschaltet.

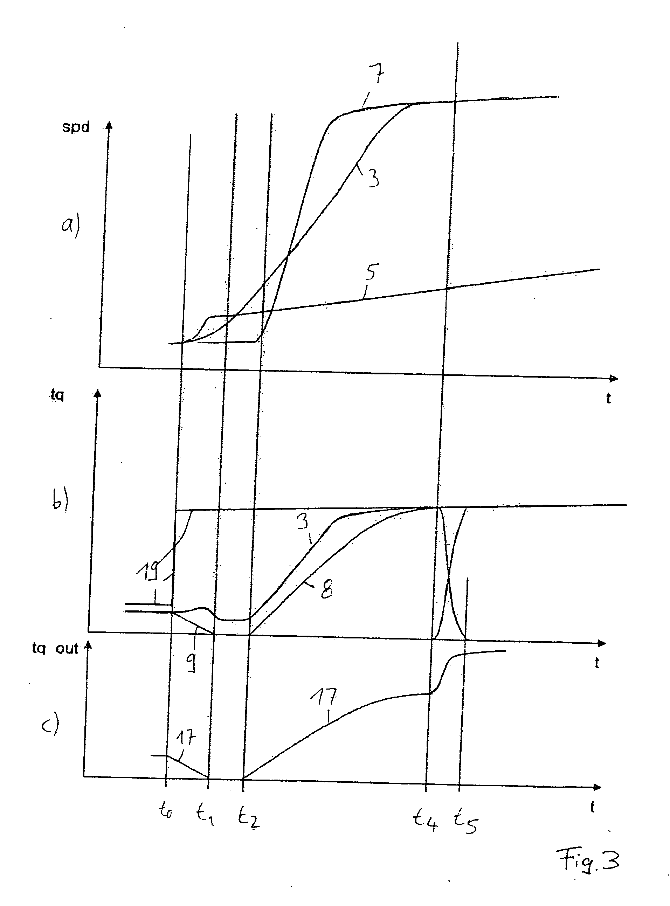

Die Figuren 3a bis 3c zeigen Drehzahl- und Drehmomentverläufe eines erfindungsgemäßen Verfahrens, die prinzipiell denjenigen aus Figur 2 entsprechen. Zum Zeitpunkt t₀, bei dem ein sprunghafter Anstieg der Drehmomentanforderung 19 erkannt wird, ist ein schnelles Auslegen des vierten Ganges erwünscht. Da jedoch die zweite Kupplung 9, die dem vierten Gang zugeordnet ist, geschlossen ist, erfolgt zunächst ein ununterbrochenes Reduzieren des an der zweiten Kupplung 9 anliegenden Drehmoments. Dazu wird die zweite Kupplung 9 im Zeitraum t₀ bis t₁ vollständig geöffnet. Die Öffnung der zweiten Kupplung 9 erfolgt dabei stetig abfallend. Ein Unterbrechen des Öffnungsvorgangs ist dabei nicht vorgesehen. Sobald zum Zeitpunkt t₁ die zweite Kupplung 9 vollständig geöffnet ist, kann bereits mit dem Auslegen des Quellgangs begonnen werden. Die bei geöffneter Kupplung möglichen übertragenen Schleppmomente sind vernachlässigt. Sobald die Räder des Radpaares 14 von der zweiten Antriebswelle 7 bzw. der zweiten Abtriebswelle 16 gelöst sind, ist der vierte Gang ausgelegt und es kann mit dem Einlegen des zweiten Radpaares 12 begonnen werden. Der zweite Gang ist dann zum Zeitpunkt t₄ vollständig eingelegt. Die Zeitdauer (t₄ - t₁) beim erfindungsgemäßen Verfahren nach Figur 3 entspricht der Länge der Zeitdauer (t₄ - t₃) beim herkömmlichen Verfahren nach Figur 2. Da jedoch bereits zum Zeitpunkt t₁ mit dem Lösen des vierten Radpaares und damit dem Auslegen begonnen werden kann, ist der Zeitpunkt t₄, bei dem der zweite Gang vollständig eingelegt ist, deutlich früher mit Bezug auf t₀ erreicht. Insofern ergibt sich eine Verkürzung des Zeitraumes vom Erkennen der erhöhten Drehmomentanforderung 19 zum Zeitpunkt to bis zum vollständigen Einlegen des zweiten Ganges zum Zeitpunkt t₄ nach dem erfindungsgemäßen Verfahren gegenüber dem herkömmlichen Verfahren.

Zum Zeitpunkt t₀ wird bereits unmittelbar mit dem Einlegen des dritten Ganges als Stützgang begonnen. Etwa zum Zeitpunkt t₁ ist der dritte Gang eingelegt. In dem Zeitraum zwischen t₁ und t₂ wird die erste Kupplung 8 vorbefüllt. Zum Zeitpunkt t₂ ist die erste Kupplung 8 vorbefüllt und so dass mit dem Schließen der ersten Kupplung begonnen werden kann. Zwischen t₄ und t₅ wird analog zum herkömmlichen Verfahren nach Figur 2 eine Übergabe von Antriebskraft vom ersten Teilgetriebe 4 auf das zweite Teilgetriebe 6 vorgenommen, so dass zum Zeitpunkt t₅ vollständig in den zweiten Gang geschaltet ist.

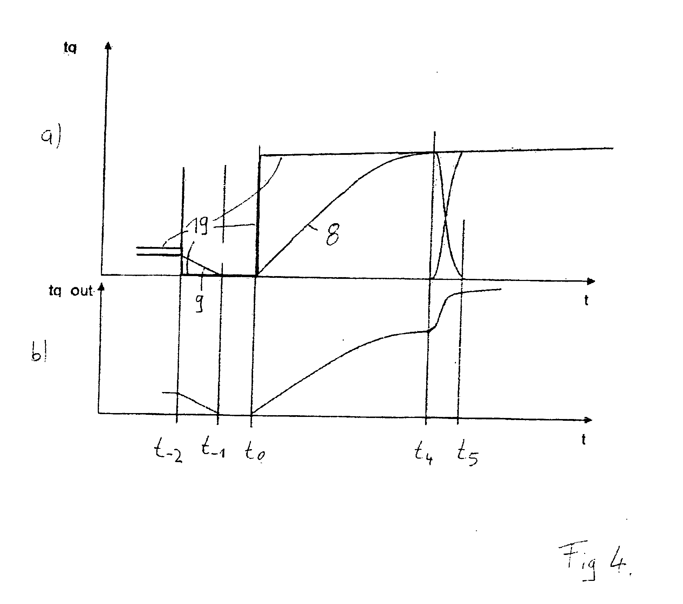

Die Figuren 4a und 4b zeigen Drehmomentverläufe, die prinzipiell den in Figur 3b und 3c gezeigten Verläufen entsprechen. Im Folgenden wird auf die Unterschiede eingegangen. Zur Zeit t < t₋₂ ist der vierte Gang eingelegt. Eine Drehmomentanforderung ist auf niedrigem Niveau aber konstant. Zu einem Zeitpunkt t₋₂ wird die Drehmomentanforderung 19 auf Null reduziert, z.B. durch Loslassen des Gaspedals. Es erfolgt im Zeitraum zwischen t₋₂ und t₋₁ ein Öffnen der zweiten Kupplung 9, wobei eine ununterbrochene Reduktion des übertragenen Drehmoments auf den Wert Null erfolgt. Zum Zeitpunkt t₋₁ ist die zweite Kupplung 9 geöffnet. Die erste Kupplung 8 ist ebenfalls geöffnet. Es findet im Zeitraum zwischen t₋₁ und t₀ ein Segeln bei geöffneten Kupplungen 8, 9 statt. Zum Zeitpunkt t₀ erfolgt eine schlagartig hohe Drehmomentanforderung 19. Durch die Steuereinrichtung wird unmittelbar festgestellt, dass ein Schalten in den zweiten Gang erforderlich ist. Dabei sind zum Zeitpunkt t₀ sowohl der dritte und der vierte Gang eingelegt. Grundsätzlich ist zwar denkbar, dass zunächst ein Schalten in den vierten Gang vorgenommen wird. Für eine Zeitersparnis wird jedoch unmittelbar in den dritten Gang als Stützgang geschaltet. Es erfolgt dabei ein Schließen der ersten Kupplung 8 und damit ein Schalten in den dritten Gang als Stützgang. Gleichzeitig wird zum Zeitpunkt t₀ mit dem Auslegen des vierten Ganges und dem Einlegen des zweiten Ganges begonnen. Da die zweite Kupplung 9 bereits geöffnet ist, kann dabei unmittelbar mit dem Lösen von dem Quellgang zugeordneten Zahnrädern von entsprechenden Wellen begonnen werden. Zum Zeitpunkt t₄ ist der zweite Gang dann vollständig eingelegt. Die Zeitdauer (t₄ - t₂) im Verfahren nach Figur 3, entspricht im Wesentlichen der Zeitdauer (t₄ - t₂) im Verfahren nach Figur 2, währenddessen das Auslegen des vierten Gangs und das Einlegen des zweiten Gangs vollzogen wird. Es entsteht ein Zeitvorteil dadurch, dass zum Zeitpunkt t₀, bei dem die Anforderung zum Gangwechsel festgestellt wurde, unmittelbar mit dem Auslegen des vierten Gangs begonnen werden kann, anstatt zunächst in den vierten Gang zu schalten. Hierzu ist es vorteilhaft, dass beim Segeln bereits ein möglicher Stützgang, nämlich im vorliegenden Fall der dritte Gang, eingelegt ist, so dass zum Zeitpunkt t₀ unmittelbar mit dem Schalten in den Stützgangs begonnen werden kann.

### Bezugszeichenliste

- 1: Doppelkupplungsgetriebe
- 2: Antriebsmotor
- 3: Getriebeeingangswelle
- 4: erstes Teilgetriebe
- 5: erste Antriebswelle
- 6: zweites Teilgetriebe
- 7: zweite Antriebswelle
- 8: erste Kupplung
- 9: zweite Kupplung
- 11: erstes Radpaar
- 12: zweites Radpaar
- 13: drittes Radpaar
- 14: viertes Radpaar
- 15: erste Abtriebswelle
- 16: zweite Abtriebswelle
- 17: Getriebeausgangswelle
- 18: Differentialgetriebe
- 19: Drehmomentanforderung

## Patentansprüche

1. Verfahren zum Schalten eines Doppelkupplungsgetriebes (1), wobei das Doppelkupplungsgetriebe (1) zwei Antriebswellen (5, 7) und eine Getriebeausgangswelle (17) aufweist, wobei der ersten Antriebswelle (5) eine erste Kupplung (8) und der zweiten Antriebswelle (7) eine zweite Kupplung (9) zugeordnet ist und beide Kupplungen (8,9) zur Übertragung unterschiedlicher Kupplungsmomente vollständig oder teilweise öffenbar bzw. schließbar sind, wobei der ersten Antriebswelle (5) und der zweiten Antriebswelle (7) jeweils bestimmte unterschiedliche Gangstufen zugeordnet sind, wobei durch die erste Kupplung (8) und durch die erste Antriebswelle (5) zumindest teilweise ein erster Kraftübertragungsweg von der Getriebeeingangswelle (3) zur Getriebeausgangswelle (17) gebildet ist und wobei durch die zweite Kupplung (9) und durch die zweite Antriebswelle (7) zumindest teilweise ein zweiter Kraftübertragungsweg von der Getriebeeingangswelle (3) zur Getriebeausgangswelle (17) gebildet ist, wobei ausgehend von einem Quellgang in einen Zielgang geschaltet werden soll, wobei vor dem Schalten in den Zielgang zumindest kurzfristig in einen Stützgang geschaltet wird, wenn der Zielgang und der Quellgang der selben Antriebswelle (5, 7) zugeordnet sind, wobei mit einer ununterbrochenen Reduktion des übertragenen Kupplungsmoments an der dem Quellgang zugeordneten Kupplung (8, 9) auf den Wert Null begonnen ist, bevor mit dem Schließen der dem Stützgang zugeordneten Kupplung begonnen wird, **dadurch gekennzeichnet, dass** beim Wechsel von dem Quellgang auf den Stützgang nicht mit dem Schließen der dem Stützgang zugeordneten Kupplung (9, 8) begonnen wird, bevor die dem Quellgang zugeordnete Kupplung (8, 9) vollständig geöffnet ist.

2. Verfahren nach Anspruch 1, **dadurch gekennzeichnet, dass** die ununterbrochene Reduktion einen weitgehend linearen Verlauf aufweist.

3. Verfahren nach einem der vorhergehenden Ansprüche, **dadurch gekennzeichnet, dass** die Dauer der ununterbrochenen Reduktion des übertragenen Kupplungsmomentes in Abhängigkeit von der benötigten Zeit für das Einlegen des Stützgangs und/oder das Kupplungsbefüllen der dem Stützgang zugeordnete Kupplung (9, 8) gesteuert wird.

4. Verfahren nach einem der vorhergehenden Ansprüche, **dadurch gekennzeichnet, dass** die Dauer der ununterbrochenen Reduktion des übertragenen Kupplungsmomentes in Abhängigkeit von der benötigten Zeit für das Auslegen des Quellgangs und/oder das Einlegen des Zielgangs gesteuert wird.

5. Verfahren nach einem der vorhergehenden Ansprüche, **dadurch gekennzeichnet, dass** beim Wechsel von dem Quellgang auf den Stützgang mit dem Auslegen des Quellgangs begonnen wird, bevor mit dem Schließen der dem Stützgang zugeordneten Kupplung (9, 8) begonnen wird.

6. Verfahren nach einem der vorhergehenden Ansprüche, **dadurch gekennzeichnet, dass** zumindest zeitweise während des Auslegens des Quellgangs und/oder während des Öffnens der dem Quellgang zugeordneten Kupplung (8, 9) der Stützgang eingelegt wird.

7. Verfahren nach einem der vorhergehenden Ansprüche, **dadurch gekennzeichnet, dass** beim Wechsel vom Stützgang auf den Zielgang während eines Öffnens der dem Stützgang zugeordneten Kupplung (9, 8) die dem Zielgang zugeordnete Kupplung (8, 9) geschlossen wird.

8. Verfahren nach einem der vorhergehenden Ansprüche, **dadurch gekennzeichnet, dass** nach einer Aufforderung zum Gangwechsel mit der ununterbrochenen Reduktion des übertragenen Kupplungsmoments an der dem Quellgang zugeordneten Kupplung (8, 9) auf den Wert Null begonnen wird oder mit dem Auslegen des Quellgangs begonnen wird.

9. Verfahren nach dem vorhergehenden Anspruch, **dadurch gekennzeichnet, dass** unmittelbar nach der Aufforderung zum Gangwechsel mit der ununterbrochenen Reduktion des übertragenen Kupplungsmoments an der dem Quellgang zugeordneten Kupplung (8, 9) auf den Wert Null begonnen wird oder mit dem Auslegen des Quellgangs begonnen wird.

10. Verfahren nach einem der vorhergehenden Ansprüche, **dadurch gekennzeichnet, dass** vor einer Aufforderung zum Gangwechsel mit der ununterbrochenen Reduktion des übertragenen Kupplungsmoments an der dem Quellgang zugeordneten Kupplung (8, 9) auf den Wert Null begonnen wird.

11. Verfahren nach dem vorhergehenden Anspruch, **dadurch gekennzeichnet, dass** beim Segeln mit geöffneten Kupplungen (8, 9) unmittelbar nachdem eine Aufforderung zum Gangwechsel festgestellt wird, ein Schließen der dem Stützgang zugeordneten Kupplung (9, 8) veranlasst wird.

12. Doppelkupplungsgetriebe, welches mittels eines Verfahrens nach einem der vorhergehenden Ansprüche geschaltet wird.

## Claims

1. Method for shifting a dual clutch transmission (1), wherein the dual clutch transmission (1) has two drive shafts (5, 7) and a transmission output shaft (17), wherein a first clutch (8) is assigned to the first drive shaft (5) and a second clutch (9) is assigned to the second drive shaft (7), and both clutches (8, 9) can be completely or partially opened or closed in order to transmit different clutch torques, wherein different specific gear speed stages are respectively assigned to the first drive shaft (5) and the second drive shaft (7), wherein a first force transmission path from the transmission input shaft (3) to the transmission output shaft (17) is at least partially formed by the first clutch (8) and by the first drive shaft (5), and wherein a second force transmission path from the transmission input shaft (3) to the transmission output shaft (17) is at least partially formed by the second clutch (9) and by the second drive shaft (7), wherein shifting is to occur from a source gear speed into a target gear speed, wherein before the shifting into the target gear speed shifting occurs at least briefly into a supporting gear speed when the target gear speed and the source gear speed are assigned to the same drive shaft (5, 7), wherein an uninterrupted reduction in the transmitted clutch torque to the value zero at the clutch (8, 9) which is assigned to the source gear speed is started before the closing of the clutch which is assigned to the supporting gear speed is started,
**characterized in that** the closing of the clutch (9, 8) which is assigned to the supporting gear speed is not started, at the changeover from the source gear speed to the supporting gear speed, before the clutch (8, 9) which is assigned to the source gear speed is completely opened.

2. Method according to Claim 1, **characterized in that** the uninterrupted reduction has a largely linear profile.

3. Method according to one of the preceding claims, **characterized in that** the duration of the uninterrupted reduction in the transmitted clutch torque is controlled as a function of the required time for the engagement of the supporting gear speed and/or the filling of the clutch (9, 8) which is assigned to the supporting gear speed.

4. Method according to one of the preceding claims, **characterized in that** the duration of the uninterrupted reduction in the transmitted clutch torque is controlled as a function of the required time for the disengagement of the source gear speed and/or the engagement of the target gear speed.

5. Method according to one of the preceding claims, **characterized in that** the disengagement of the source gear speed is started, at the changeover from the source gear speed to the supporting gear speed, before the closing of the clutch (9, 8) which is assigned to the supporting gear speed is started.

6. Method according to one of the preceding claims, **characterized in that** the supporting gear speed is engaged at least temporarily during the disengagement of the source gear speed and/or during the opening of the clutch (8, 9) which is assigned to the source gear speed.

7. Method according to one of the preceding claims, **characterized in that** the clutch (8, 9) which is assigned to the target gear speed is closed at the changeover from the supporting gear speed to the target gear speed during opening of the clutch (9, 8) which is assigned to the supporting gear speed.

8. Method according to one of the preceding claims, **characterized in that**, after a request to change the gear speed, the uninterrupted reduction in the transmitted clutch torque to the value zero at the clutch (8, 9) which is assigned to the source gear speed is started, or the disengagement of the source gear speed is started.

9. Method according to the preceding claim, **characterized in that**, directly after the request to change the gear speed, the uninterrupted reduction in the transmitted clutch torque to the value zero at the clutch (8, 9) which is assigned to the source gear speed is started or the disengagement of the source gear speed is started.

10. Method according to one of the preceding claims, **characterized in that**, before a request to change the gear speed, the uninterrupted reduction in the transmitted clutch torque to the value zero at the clutch (8, 9) which is assigned to the source gear speed is started.

11. Method according to the preceding claim, **characterized in that**, in the case of coasting with the clutches (8, 9) opened directly after a request to change the gear speed is detected, closing of the clutch (9, 8) which is assigned to the supporting gear speed is brought about.

12. Dual clutch transmission which is shifted by means of a method according to one of the preceding claims.

## Revendications

1. Procédé de changement de vitesse d'une transmission à double embrayage (1), dans lequel la transmission à double embrayage (1) présente deux arbres d'entraînement (5, 7) et un arbre de sortie de transmission, le premier arbre d'entraînement (5) étant associé à un premier embrayage (8) et le deuxième arbre d'entraînement (7) étant associé un deuxième embrayage (9) et les deux embrayages (8, 9) pouvant être ouverts ou fermés complètement ou partiellement pour transférer différents couples d'embrayage, le premier arbre d'entraînement (5) et le deuxième arbre d'entraînement (7) étant à chaque fois associés à des rapports de vitesse différents déterminés, une première voie de transfert de force de l'arbre d'entrée de transmission (3) à l'arbre de sortie de transmission (17) étant formée au moins en partie par le premier embrayage (8) et par le premier arbre d'entraînement (5) et une deuxième voie de transfert de force de l'arbre d'entrée de transmission (3) à l'arbre de sortie de transmission (17) étant formée au moins en partie par le deuxième embrayage (9) et par le deuxième arbre d'entraînement (7), un changement de vitesse devant être effectué depuis un rapport initial dans un rapport cible, un rapport de support étant au moins brièvement enclenché avant le passage au rapport cible, lorsque le rapport cible et le rapport initial sont associés au même arbre d'entraînement (5, 7), l'opération commençant avec une réduction ininterrompue du couple d'embrayage transmis au niveau de l'embrayage (8, 9) associé au rapport initial jusqu'à la valeur zéro avant de commencer à fermer l'embrayage associé au rapport de support, **caractérisé en ce que** lors du passage du rapport initial au rapport de support, la fermeture de l'embrayage (9, 8) associé au rapport de support n'est pas amorcée avant que l'embrayage (8, 9) associé au rapport initial ne soit complètement ouvert.

2. Procédé selon la revendication 1, **caractérisé en ce que** la réduction ininterrompue présente une allure essentiellement linéaire.

3. Procédé selon l'une quelconque des revendications précédentes, **caractérisé en ce que** la durée de la réduction ininterrompue du couple d'embrayage transmis est commandée en fonction du temps nécessaire pour l'enclenchement du rapport de support et/ou pour le remplissage de l'embrayage (9, 8) associé au rapport de support.

4. Procédé selon l'une quelconque des revendications précédentes, **caractérisé en ce que** la durée de la réduction ininterrompue du couple d'embrayage transmis est commandée en fonction du temps nécessaire pour la sortie du rapport initial et/ou pour l'enclenchement du rapport cible.

5. Procédé selon l'une quelconque des revendications précédentes, **caractérisé en ce que** lors du passage du rapport initial au rapport de support, la sortie du rapport initial est entamée avant que ne commence la fermeture de l'embrayage (9, 8) associé au rapport de support.

6. Procédé selon l'une quelconque des revendications précédentes, **caractérisé en ce qu'**au moins temporairement pendant la sortie du rapport initial et/ou pendant l'ouverture de l'embrayage (8, 9) associé au rapport initial, le rapport de support est enclenché.

7. Procédé selon l'une quelconque des revendications précédentes, **caractérisé en ce que** lors du passage du rapport de support au rapport cible pendant une ouverture de l'embrayage (9, 8) associé au rapport de support, l'embrayage (8, 9) associé au rapport cible est fermé.

8. Procédé selon l'une quelconque des revendications précédentes, **caractérisé en ce qu'**après une demande de changement de rapport, la réduction ininterrompue du couple d'embrayage transmis jusqu'à la valeur zéro commence au niveau de l'embrayage (8, 9) associé au rapport initial ou bien la sortie du rapport initial est amorcée.

9. Procédé selon l'une quelconque des revendications précédentes, **caractérisé en ce que** immédiatement après la demande de changement de rapport, la réduction ininterrompue du couple d'embrayage transmis jusqu'à la valeur zéro commence au niveau de l'embrayage (8, 9) associé au rapport initial ou bien la sortie du rapport initial est amorcée.

10. Procédé selon l'une quelconque des revendications précédentes, **caractérisé en ce qu'**avant une demande de changement de rapport, la réduction ininterrompue du couple d'embrayage transmis jusqu'à la valeur zéro commence au niveau de l'embrayage (8, 9) associé au rapport initial.

11. Procédé selon l'une quelconque des revendications précédentes, **caractérisé en ce que** lors du déplacement en roue libre avec les embrayages ouverts (8, 9), immédiatement après qu'une demande de changement de rapport a été constatée, a lieu une fermeture de l'embrayage (9, 8) associé au rapport de support.

12. Transmission à double embrayage commutée au moyen d'un procédé selon l'une quelconque des revendications précédentes.
